**Europäisches Patentamt**

**European Patent Office**

**Office européen des brevets**

(19)

(11) Numéro de publication: **0 132 195**
**B1**

(12)

# FASCICULE DE BREVET EUROPÉEN

(45) Date de publication du fascicule du brevet:
**16.03.88**

(51) Int. Cl.⁴: **F 16 H 55/56**

(21) Numéro de dépôt: **84401460.5**

(22) Date de dépôt: **10.07.84**

(54) **Variateur de vitesse à poulie à joue mobile, et appareil muni d'un tel variateur.**

(30) Priorité: **19.07.83 FR 8311894**

(43) Date de publication de la demande:
**23.01.85 Bulletin 85/4**

(45) Mention de la délivrance du brevet:
**16.03.88 Bulletin 88/11**

(84) Etats contractants désignés:
**BE DE FR GB NL SE**

(56) Documents cité:
**FR-A-519 775**
**FR-A-2 448 079**
**US-A-4 332 572**

(73) Titulaire: **ETS BONNET, 117, rue Grenette, F-69653 Villefranche sur Saone (FR)**

(72) Inventeur: **Rivier, Philippe, THOMSON- CSF SCPI 173, bld Haussmann, F-75379 Paris Cedex 08 (FR)**
Inventeur: **Guerpillon, Alain, THOMSON- CSF SCPI 173, bld Haussmann, F-75379 Paris Cedex 08 (FR)**

(74) Mandataire: **Phan, Chi Quy, THOMSON- CSF SCPI 19, avenue de Messine, F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un variateur de vitesse à poulie à joue mobile et appareil muni d'un tel variateur.

Un variateur de vitesse à poulie à joue mobile est applicable dans un système mécanique nécessitant une variation de vitesse tel que les machines outils, les appareils électroménagers, les appareils utilisés dans les industries agroalimentaires par exemple des pétrins, des batteurs-mélangeurs.

Un variateur de vitesse à poulie à joue mobile connu comprend habituellement un système à vis et écrou pour commander l'écartement des joues de la poulie du variateur qui reçoit une courroie de transmission. Cette courroie de transmission relie mécaniquement la poulie à joue mobile du variateur à une poulie motrice si cette poulie du variateur est montée sur un arbre récepteur ou inversement à une poulie réceptrice si cette poulie du variateur est montée sur un arbre moteur.

Pour réduire au minimum le glissement entre courroie et poulie au cours du fonctionnement du variateur la courroie de transmission est habituellement maintenue constamment tendue dans la gorge de la poulie du variateur soit par un tendeur à poulie soit par une autre poulie à joue mobile dont les joues sont élastiquement rapprochées l'une de l'autre par un système élastique du type à ressorts de compression. Dans ce variateur de vitesse, une variation de l'écartement des joues de la poulie entraîne une variation du diamètre d'enroulement de la courroie de transmission sur cette poulie et par conséquent soit une variation de la vitesse de rotation de la poulie du variateur pour une vitesse linéaire donnée de cette courroie, dans le cas où cette poulie est une poulie réceptrice soit une variation de la vitesse linéaire de cette courroie pour une vitesse de rotation donnée de la poulie du variateur dans le cas où la poulie est une poulie motrice.

Durant le fonctionnement du variateur, la courroie de transmission qui est tendue exerce une forte pression sur les joues de la poulie du variateur dans le sens qui tend à les écarter. Pour maintenir la joue mobile de la poulie du variateur à une position stable donnée, il faut opposer à cette pression d'écartement exercée par la courroie, une force équivalente.

Dans un variateur connu à poulie à joue mobile et à système à leviers, ce sont ces leviers qui assurent le maintien de la joue mobile de la poulie à une position stable donnée et à leur tour ces leviers sont mis et maintenus en position par un système à vis et écrous.

La structure de ce variateur connu est ainsi relativement compliquée et coûteuse, et un bon fonctionnement de ce variateur dépend en grande partie de la solidité des filets de vis de ce système à vis et écrou de maintien des leviers car ces filets de vis doivent s'opposer à la pression d'écartement exercée par la courroie de transmission. Des vibrations mécaniques se produisant au cours du fonctionnement de ce variateur ne manquent pas de créer un effet de matage sur ces fragiles filets de vis et entraînent une déformation et une usure prématurée de celles-ci.

Les mêmes inconvénients sont également retrouvés dans un variateur connu dans lequel un système à vis et écrou commande directement l'écartement des joues de la poulie du variateur.

En outre dans un variateur connu à poulie à joue mobile, la joue mobile est habituellement montée coulissante le long de l'arbre de la poulie et rendue solidaire en rotation de cet arbre par clavette montée sur l'arbre et coulissant dans une rainure longitudinale coopérante de l'alésage de la poulie ou par des cannelures longitudinales complémentaires formées sur l'arbre et dans l'alésage de la poulie.

Des vibrations mécaniques se produisant au cours du fonctionnement du variateur entraînent également un matage et une déformation de ces cannelures ou rainures et clavette qui provoquent des coincements rendant difficile le coulissement de la joue mobile de la poulie sur le long de l'arbre.

Par ailleurs, le document US-A-4 332 572 décrit un dispositif d'embrayage à poulie à joue mobile commandée par un système à came et à suiveur de came actionné par un câble, système, qui rapproche cette joue mobile d'une joue fixe de cette poulie pour coincer une courroie de transmission en mouvement entre ces deux joues lors d'un embrayage, et éloigne cette joue mobile de la joue fixe de cette poulie pour rendre libre cette courroie de transmission en mouvement lors d'un débrayage, et le document FR-A-519 775 qui est utilisé à délimiter la revendication 1, publie un mécanisme de variation de vitesse à poulie à joue mobile recevant une courroie de transmission dans lequel le déplacement de la joue mobile par rapport à une joue fixe de cette poulie est réalisé au moyen d'un système à cames coaxiales complémentaires, montées en superposition dans l'espace et à levier de manoeuvre de ces cames. A chacune des positions de ce levier correspond une position de réglage de ce mécanisme de variation de vitesse. La stabilité du mécanisme décrit n'est cependant pas assurée étant donné que cette stabilité dépend d'une fixité du maintien de ce levier de manoeuvre en chacune de ses positions, que cette stabilité n'est pas envisagée, et qu'aucun système ou mécanisme pour assurer cette fixité de ce maintien de ce levier n'est ni décrit ni suggéré. D'une manière analogue dans le dispositif d'embrayage, objet du US-A-4 332 572 une stabilité de la position d'embrayage de ce dispositif dépend d'une fixité du maintien en position du suiveur de came dans le système à came et à suiveur de came et cette stabilité n'est ni envisagée ni suggérée.

La présente invention ayant pour but d'éviter ces inconvenients, permet de réaliser un variateur de vitesse à poulie à joue mobile efficace et stable en fonctionnement, économique en fabrication, facile au réglage et ne favorisant pas une déformation qui entraîne des coincements des parties en contact de coulissement de la joue mobile de la poulie, et un appareil pourvu d'un tel variateur de vitesse.

Selon l'invention, un variateur de vitesse à poulie à joue mobile recevant une courroie de transmission, et pourvu d'un système de réglage comprenant d'une part des moyens de réglage par calage de la joue mobile par rapport à la joue fixe de cette poulie du variateur, comportant deux éléments à cames coaxiales, longitudinalement complémentaires et montés en superposition, l'un de ces éléments étant fixe et l'autre de ces éléments étant mobile et relié à cette joue mobile au moyen d'un roulement à bille, et d'autre part des moyens de maintien en position d'écartement de cette joue mobile par rapport à cette joue fixe, comportant un dispositif de commande effectuant un mouvement relatif de rotation entre ces deux éléments à cames pour faire glisser leurs cames les unes sur les autres suivant un sens de rotation pour éloigner axialement ces deux éléments afin de rapprocher les joues fixe et mobile de la poulie, et suivant un sens opposé de rotation pour rapprocher axialement ces deux éléments afin d'écarter les joues de cette poulie du variateur, lors d'un choix d'une vitesse opérée par ce dernier, caractérisé en ce que les deux éléments à cames axiales sont montés dans l'espace entre la joue mobile et une butée fixe, l'élément fixe à came étant assujetti à cette butée, et le dispositif de commande comporte un dispositif à pignon et crémaillère.

Pour mieux faire comprendre l'invention on décrit ci-après, un exemple de réalisation illustré par des dessins ci-annexés dont:

- la figure 1 représente une vue partielle et schématique en perspective, en coupe partielle d'un variateur de vitesse à poulie à joue mobile, réalisé selon l'invention, montrant la joue mobile et la joue fixe de la poulie atteignant leur écart minimal, et la courroie de transmission repoussée dans la périphérie de cette poulie,

- la figure 2 représente une vue analogue à la figure 1 montrant les joues mobile et fixe de la poulie du variateur parvenant à leur écart maximal et la courroie de transmission se rapprochant du centre de cette poulie,

- la figure 3 représente une vue en perspective d'un élément fixe d'un système à cames de réglage par calage de la joue mobile de la poulie du variateur de la figure 1,

- la figure 4 représente une vue en perspective d'un élément mobile du système à cames de réglage par calage destiné à coopérer avec l'élément fixe de la figure 3, et

- la figure 5 représente une autre vue en perspective de l'élément mobile de la figure 4.

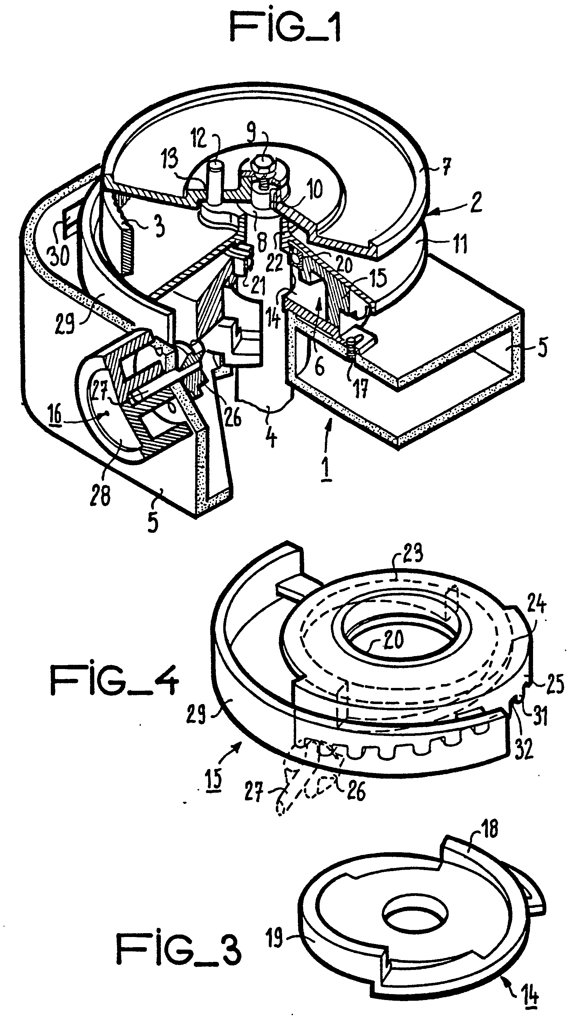

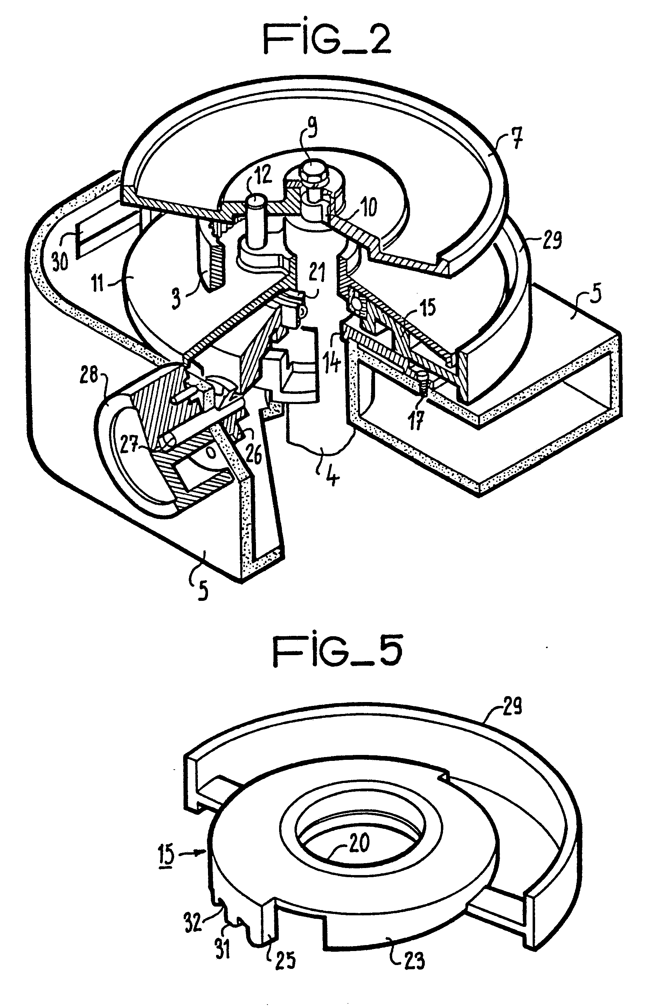

Un variateur de vitesse à poulie à joue mobile 1 réalisé selon l'invention, destiné à un système mécanique nécessitant une variation de vitesse tels que les machines outils, les appareils électroménagers, les appareils utilisés dans les industries agroalimentaires, est schématiquement et partiellement illustré dans les figures 1 et 2.

Le variateur de vitesse 1 comprend une poulie 2 recevant une courroie de transmission 3, et montée sur un arbre 4 d'un appareil ou système mécanique dont une partie du bâti fixe est représentée et indiquée en 5 et un système à cames 6 réalisant un réglage par calage de la joue mobile de la poulie 2 contre une butée fixe comme dispositif de réglage et de maintien en position d'écartement de la joue mobile par rapport à la joue fixe de cette poulie lors d'un choix d'une vitesse opérée par ce variateur.

Dans l'exemple illustré la poulie 2 comprend une joue fixe 7 bloquée en translation contre un épaulement 8 de l'arbre 4 au moyen d'une vis 9, et en rotation par l'intermédiaire d'une clavette 10, et une joue mobile 11 montée axialement coulissante le long de l'arbre 4 de manière à pouvoir se rapprocher ou s'écarter de la joue fixe 7. La joue mobile 11 est munie à une certaine distance de son alésage, d'un téton ou pion axial 12 qui, en coulissant dans un trou de réception correspondant 13 formé dans la joue fixe 7, assure un entraînement mutuel de ces deux joues 7 et 11 de la poulie 2 dans leur rotation avec l'arbre 4.

Le téton 12 et le trou de réception correspondant 13 permettent par leur structure une grande facilité de fabrication par rapport à celle d'une clavette fixée sur l'arbre 4 et d'une rainure correspondante de réception de cette clavette formée dans l'alésage de la joue mobile 11 ou à celle des cannelures formées sur l'arbre et dans l'alésage de la joue mobile 11. En outre, une position du téton 12 relativement éloignée du centre de l'arbre 4 par rapport à celle d'une clavette directement fixée sur cet arbre 4, donne à cet ensemble téton 12 - trou 13 un bras de levier dans l'entraînement en rotation de la poulie 2 plus grand qu'un bras de levier obtenu par un dispositif équivalent constitué par un ensemble "clavette-rainure de réception". L'ensemble téton 12 - 13 peut ainsi, par rapport à cet ensemble "clavette-rainure de réception", assurer avec un relativement moindre effort, une force donnée d'entraînement de la joue mobile 11 de la poulie 2. Et le matage provoqué au niveau de cet ensemble téton 12 - trou 13 par des vibrations de fonctionnement est également réduit au minimum. Par conséquent une déformation rapide et une usure prématurée du téton 12 et du trou 13 qui empêche un bon coulissement de la joue mobile 11 sur l'arbre 4 peuvent ainsi être évitées.

Le système à cames de réglage par calage 6 de la joue mobile 11 de la poulie 2 sur une butée fixe qui est constituée dans l'exemple illustré dans les figures 1 et 2 par le bâti 5 comprend deux éléments à cames coaxiales longitudinalement complémentaires et un dispositif de commande à pignon et crémaillère 16 qui effectue un mouvement relatif de rotation entre ces deux éléments pour faire glisser les cames de l'élément mobile 15 sur celles de l'élément fixe 14 suivant un sens de rotation pour réaliser un éloignement axial de ces deux éléments, et suivant le sens de rotation opposé provoquer un rapprochement axial de ces deux éléments. Ces deux éléments 14 et 15 sont montés en superposition dans l'espace entre la joue mobile 11 et le bâti fixe 5 de manière coaxiale avec cette poulie mobile 11.

Dans le système à cames de réglage par calage 6 (figures 1, 2, 3, 4, 5) l'élément fixe à came 14 monté avec son alésage coaxial avec l'arbre 4 et solidement fixé sur le bâti 5 au moyen des vis 17, comprend dans la périphérie de sa surface libre opposée à sa surface de fixation sur le bâti 5, deux cames 18, 19 axiales, semi-circulaires identiques à rampe montante à partir de cette surface libre.

L'élément mobile à came 15 avec son alésage 20 coaxial avec l'arbre 4 est solidement relié à la joue mobile 11 de la poulie 2 au moyen d'un roulement à bille 21. Le bord de l'alésage 20 de l'élément mobile à came 15 est fixé sur la bague extérieure de ce roulement à bille 21 tandis que la bague intérieure de ce roulement est fixée sur le moyeu 22 de cette joue mobile 11. L'élément mobile à cames 15 comprend sur sa surface libre opposée à celle adjacente à cette joue mobile 11, deux cames axiales, semi-circulaires identiques 23, 24 à rampe montante à partir de cette surface libre de manière complémentaire à celle des cames axiales 18, 19 de l'élément fixe à came 14. Dans le système à cames de réglage par calage 6, les rampes des cames complémentaires des éléments fixe 14 et mobile 15 glissent les unes sur la surface des autres, lorsque l'élément mobile à came 15 est tourné dans un sens ou dans le sens opposé autour de l'arbre 4. Quand les sommets des rampes des cames 23, 24 de l'élément mobile à came 15 touchent les parties les plus basses des rampes des cames complémentaires 18, 19 de l'élément fixe à came 14, les deux éléments 14 et 15 se rapprochent au maximum et la joue mobile 11 de la poulie 2 entraînée par l'élément mobile à came 15 a alors un écart maximal avec la joue fixe 7 de cette poulie 2.

Quand les sommets des rampes des cames 23, 24 de l'élément mobile à came 15 se trouvent sur les sommets des rampes des cames complémentaires 18, 19 de l'élément fixe à came 14, les deux éléments 14 et 15 s'éloignent au maximum, et la joue mobile 11 de la poulie 2 entraînée par l'élément mobile à came 15 a alors un écart minimal avec la joue fixe 7 de cette poulie 2.

L'élément mobile à came 15 comprend sur une partie de sa périphérie, à l'extérieur de ses cames axiales 23, 24, une crémaillère semi-circulaire 25 qui forme avec un pignon 26 le dispositif 16 de commande de rotation de cet élément mobile à came 15. Le pignon 26 comprend un axe 27 (figures 1 et 2) monté libre en rotation sur un élément ou une partie solidaire de cette butée fixe qui est, dans l'exemple illustré, le bâti 5 de l'appareil, et muni d'un bouton de commande 28.

Quand on tourne le bouton de commande 28, les dents du pignon 26 en s'engrénant dans les dents de la crémaillère 25 (figure 4) déplacent cette dernière, et font tourner l'élément mobile à came 15 autour de l'arbre 4. Une rotation de l'élément mobile à came 15 entraîne un rapprochement ou un éloignement de la joue mobile 11 vis-à-vis de la joue fixe 7 de la poulie 2. Un rapprochement des joues 7 et 11 de la poulie 2 contribue à pousser la courroie de transmission 3 dans la périphérie de cette poulie 2 (figure 1), ce qui a pour effet soit d'augmenter le diamètre d'enroulement de la courroie 3 et de réduire de ce fait la vitesse de rotation de la poulie 2 pour une vitesse linéaire donnée de la courroie 3 si la poulie 2 est une poulie réceptrice soit d'augmenter la vitesse linéaire de la courroie de transmission 3 pour une vitesse de rotation donnée de la poulie 2 si celle-ci est une poulie motrice.

Un éloignement des joues 7 et 11 de la poulie 2 contribue à laisser la courroie de transmission 3 se rapprocher du centre de cette poulie 2 (figure 2) ce qui a pour effet de diminuer le diamètre d'enroulement de la courroie 3 et soit d'augmenter de ce fait la vitesse de rotation de la poulie 2 pour une vitesse linéaire donnée de la courroie 3 si la poulie 2 est une poulie réceptrice soit de réduire la vitesse linéaire de la courroie de transmission 3 pour une vitesse de rotation donnée de la poulie 2 si celle-ci est une poulie motrice.

Un angle de rotation de l'élément mobile à came 15 par rapport à l'élément fixe à came 14, du système à cames de réglage par calage 6 qui définit à travers une position relative de l'une des rampes sur l'autre de ces rampes des cames complémentaires 18, 19 et 23, 24, un écartement correspondant des joues 7 et 11 de la poulie 2 et par conséquent un diamètre d'enroulement correspondant de la courroie de transmission 3 sur cette poulie 2 peut représenter ainsi une valeur de vitesse correspondante soit une vitesse de rotation de la poulie 2 si celle-ci est une poulie réceptrice soit une vitesse linéaire de la courroie 3 ou une vitesse de rotation d'une deuxième poulie entraînée par cette courroie si la poulie 2 est motrice. Pour rendre facile un repérage de cet angle de rotation de l'élément mobile à came 15, cet élément 15 comprend un plastron circulaire ou semi-circulaire et gradué 29 qui se défile avec cet élément 15 derrière un index fixe disposé par exemple au niveau d'une fenêtre 30 du bâti fixe 5 de l'appareil. Le plastron circulaire ou semi-circulaire 29 peut être gradué directement en unités de vitesse. Un choix de vitesse dans le variateur 1 se réduit à faire tourner le bouton de commande 28 du système à cames de réglage par calage 6 dans un sens qui permet de ramener sur l'index fixe se trouvant au niveau de la fenêtre 30, la graduation indiquant la vitesse choisie marquée sur ce plastron 29.

Dans la crémaillère 25 les sommets de ses dents 31 et les fonds des espaces entre-dents 32 sont alignés selon des surfaces parallèles à celle de la rampe de la came adjacente 24 de manière qu'à une position relative quelconque des rampes des cames complémentaires 18, 19 et 23, 24, les dents de la crémaillère 25 qui sont en contact avec celles du pignon 26 se trouvent juste à la hauteur de ces dents du pignon 26 pour permettre un fonctionnement du réglage par rotation du bouton de commande 28.

La courroie de transmission 3 relie mécaniquement la poulie 2 du variateur de vitesse 1 à une poulie de transfert non représentée avec laquelle une transmission de mouvement est réalisée.

Dans l'exemple illustré, la poulie 2 du variateur 1 est une poulie réceptrice, la poulie de transfert non représentée est une poulie motrice. Pour une bonne transmission de mouvement entre les deux poulies, la courroie de transmission 3 est habituellement maintenue tendue par un tendeur du type connu non représenté pour réduire au maximum le glissement de la courroie de transmission 3 sur la surface de ces poulies. Dans le cas où la poulie de transfert non représentée est constituée par une poulie à joue mobile d'un type connu dont la joue mobile est constamment rapprochée de la joue fixe par un système à ressorts de compression, la courroie de transmission 3 est, sous l'effet de serrage de cette joue mobile, constamment poussée vers la périphérie de cette poulie de transfert. La courroie 3 est de ce fait constamment tendue et le tendeur de courroie rappelé ci-dessus peut être supprimé.

Dans le variateur 1, la courroie de transmission 3 tendue exerce une forte pression sur les joues de la poulie 2 du variateur 1 et tend à éloigner la joue mobile 11 de la joue fixe 7 de cette poulie 2. Grâce à l'élément mobile 15 du système à cames de réglage par calage 6 qui s'appuie en permanence par ses cames 23, 24 sur les cames complémentaires 18, 19 de l'élément fixe à came 14, joue constamment le rôle d'une cale glissée entre cette joue mobile 11 de la poulie 2 et une butée fixe constituée par le bâti 5, et empêche cette joue mobile 11 de se déplacer. La joue mobile 11 de la poulie 2 est ainsi solidement maintenue dans ses différentes positions correspondantes aux vitesses choisies, par un calage direct de cette joue 11 sur le bâti même de l'appareil 5 au moyen des éléments à cames 14 et 15 du système à cames de réglage par calage 6. La solidité des éléments 14 et 15 celle de leurs cames complémentaires 18, 19 et 23, 24 et celle du bâti 4 permettent de maintenir efficacement et fermement la joue mobile 11 de la poulie 2 en position sans courir le risque d'une déformation et d'une usure prématurée retrouvé dans les variateurs de vitesse connus dans lesquels la joue mobile de la poulie est maintenue en position soit par une système à vis et à écrou soit par un système à leviers et/ou à vis-et-écrou.

En outre grâce à leur structure simple les éléments fixe 14 et mobile 15 du système à cames de réglage par calage 6 peuvent être avantageusement réalisés d'une manière économique par moulage ou par injection en métal ou notamment en une matière synthétique sans compromettre l'efficacité du variateur de vitesse 1 dans son fonctionnement et la facilité de réglage de ce dernier.

**Revendications**

1. Variateur de vitesse à poulie à joue mobile recevant une courroie de transmission (3) et pourvu d'un système de réglage comprenant d'une part des moyens de réglage par calage (6) de la joue mobile (11) par rapport à la joue fixe (7) de cette poulie (2) du variateur, comportant deux éléments à cames coaxiales, longitudinalement complémentaires (14, 15) et montés en superposition, l'un de ces éléments étant fixe (14) et l'autre de ces éléments étant mobile (15) et relié à cette joue mobile (11) au moyen d'un roulement à bille (21), et d'autre part des moyens de maintien en position d'écartement de cette joue mobile (11) par rapport à cette joue fixe (7), comportant un dispositif de commande (16) effectuant un mouvement relatif de rotation entre ces deux éléments à cames (14, 15) pour faire glisser leurs cames les unes (23, 24) sur les autres (18, 19) suivant un sens de rotation pour éloigner axialement ces deux éléments (14, 15) afin de rapprocher les joues fixe (7) et mobile (11) de la poulie (2), et suivant un sens opposé de rotation pour rapprocher axialement ces deux éléments (14, 15) afin d'écarter les joues (7, 11) de cette poulie (2) du variateur, lors d'un choix d'une vitesse opérée par ce dernier, caractérisé en ce que les deux éléments à cames axiales sont montés dans l'espace entre la joue mobile (11) et une butée fixe (5), l'élément fixe à came (14) étant assujetti à cette butée, et le dispositif de commande (16) comporte un dispositif à pignon (26) et crémaillère (25).

2. Variateur selon la revendication 1, caractérisé en ce que dans le système à cames de réglage (6), l'élément fixe à came (14) comprend dans la périphérie de sa surface libre, opposée à sa surface de fixation contre la butée fixe (5), deux cames (18, 19) axiales, semi-circulaires, identiques, à rampe montante à partir de cette surface libre, et l'élément mobile à came (15) est pourvu sur sa surface libre, opposée à sa surface adjacente à la joue mobile (11), de deux cames (23, 24) axiales, semi-circulaires, identiques, à rampe montante à partir de cette surface libre, complémentaire à celle des cames axiales (18, 19) de l'élément fixe à came (14).

3. Variateur selon l'une des revendications 1 et 2, caractérisé en ce que dans le système à came de réglage (6), l'élément mobile à came (15) porte sur une partie de sa périphérie, à l'extérieur de ses cames axiales (23, 24), une crémaillère semi-circulaire (25) qui forme avec un pignon (26) un dispositif de commande à pignon et crémaillère (16), le pignon (26) étant monté, par son axe (27) libre en rotation, sur un élément ou partie solidaire de cette butée fixe (5).

4. Variateur selon la revendication 3, caractérisé en ce que dans l'élément mobile à came (15) du système à cames de réglage (6), la crémaillère (25) comprend des sommets des dents (31) et des fonds des espaces entre-dents (32), alignés selon des surfaces parallèles à celle de la rampe de la came axiale adjacente (24) de cet élément mobile à came (15).

5. Variateur selon l'une des revendications 1 à 4, caractérisé en ce que dans le système à cames de réglage (6), l'élément mobile à came (15) porte un plastron circulaire ou semi-circulaire et gradué (29) qui peut se déplacer avec cet élément mobile à came (15) derrière un index fixe.

6. Variateur selon l'une des revendications 1 à 5, caractérisé en ce que dans le système à cames de réglage (6), les éléments à cames fixe (14) et mobile (15) sont réalisés en une matière synthétique moulée ou injectée.

7. Variateur selon l'une des revendications 1 à 5, caractérisé en ce que dans le système à cames de réglage par calage (6), les éléments à came fixe (14) et mobile (15) sont réalisés en un métal moulé ou injecté.

8. Variateur selon la revendication 1, ayant une poulie (2) dont la joue fixe (7) est rendue solidaire en translation et en rotation de l'arbre (4) qui la supporte, caractérisé en ce qu'il comprend une poulie (2) dont la joue mobile (11) est pourvue d'un téton ou pion axial (12) coulissant dans un trou (13) correspondant formé dans la joue fixe (7).

9. Appareil pourvu d'un variateur de vitesse (1) selon l'une des revendications 1 à 8, caractérisé en ce qu'il comprend un bâti (5) servant de butée fixe au système à cames de réglage par calage (6) du variateur (1).

10. Appareil selon la revendication 9, caractérisé en ce qu'il comprend dans son bâti (5) une fenêtre (30) munie d'un index fixe, derrière laquelle se défile le plastron gradué (29) du système à cames de réglage par calage (6).

**Patentansprüche**

1. Wechselgetriebe mit einer einen Übertragungsriemen (3) aufnehmenden und einen beweglichen Scheibenflansch aufweisenden Riemenscheibe und einem Einstellsystem, welches einerseits Mittel (6) zur Einstellung durch Festlegung des beweglichen Scheibenflansches (11) bezüglich des festen Scheibenflansches (11) dieser Riemenscheibe (2) des Wechselgetriebes umfaßt, wobei diese Mittel zwei koaxiale Steuerkurvenelemente umfassen, die in Längsrichtung komplementär (14, 15) sowie einander überlagert angeordnet sind, wobei eines dieser Elemente fest (14) und das andere (15) beweglich und an diesen beweglichen Scheibenflansch (11) über ein Kugellager (21) angeschlossen ist, und andererseits Mittel umfaßt, um diesen beweglichen Scheibenflansch (11) im Abstand von diesem festen Scheibenflansch (7) zu halten, mit einer Steuervorrichtung (16), welche eine relative Drehbewegung zwischen diesen zwei Steuerkurvenelementen (14, 15) herbeiführt, um ihre Steuerkurven (23, 24) im einen Drehsinne übereinandergleiten zu lassen (18, 19), um diese zwei Elemente (14, 15) in Axialrichtung voneinander zu entfernen, damit der feste Scheibenflansch (7) und der bewegliche Scheibenflansch (11) der Riemenscheibe (2) aneinander angenähert werden, und im entgegengesetzten Drehsinne, um diese zwei Elemente (14, 15) axial aneinander anzunähern, damit die Scheibenflansche (7, 11) dieser Riemenscheibe (2) des Wechselgetriebes voneinander entfernt werden, wenn eine Geschwindigkeit desselben gewählt wird, dadurch gekennzeichnet, daß die zwei Elemente mit axialen Steuerkurven in dem Raume zwischen dem beweglichen Scheibenflansch (11) und einem festen Anschlag (5) angeordnet sind, wobei das feste Steuerkurvenelement (14) von diesem Anschlag abhängig ist, und die Steuervorrichtung (16) eine Vorrichtung mit Ritzel (26) und Zahnstange (25) umfaßt.

2. Wechselgetriebe nach Anspruch 1, dadurch gekennzeichnet, daß in dem System mit Einstell-Steuerkurven (16) das feste Steuerkurvenelement (14) im Umfang seiner freien Oberfläche, welche von ihrer Befestigungsoberfläche an dem festen Anschlag (5) abgewandt ist, zwei axiale, halbkreisförmige und gleiche Steuerkurven (18, 19) aufweist, die eine von dieser freien Oberfläche ausgehend ansteigende Rampe bilden, und das bewegliche Steuerkurvenelement (15) auf seiner freien Oberfläche, welche von der Oberfläche abgewandt ist, die an den beweglichen Scheibenflansch (11) angrenzt, zwei axiale, halbkreisförmige und gleiche Steuerkurven (23, 24) aufweist, die eine von dieser freien Oberfläche ausgehend ansteigende Rampe bilden, welche komplementär zu derjenigen der axialen Steuerkurven (18, 19) des festen Steuerkurvenelements (14) ist.

3. Wechselgetriebe nach Anspruch 1 oder 2, dadurch gekennzeichnet, daß in dem Einstell-Steuerkurvensystem (6) das bewegliche Steuerkurvenelement (15) auf einem Teil seines Umfangs und außerhalb seiner axialen Steuerkurven (23, 24) eine halbkreisförmige Zahnstange (25) trägt, die mit einem Ritzel (26) eine Steuervorrichtung mit Ritzel und Zahnstange (16) bildet, wobei das Ritzel (26) mit seiner frei drehbeweglichen Achse (27) an einem Element oder Teil gelagert ist, welches fest mit dem festen Anschlag (5) verbunden ist.

4. Wechselgetriebe nach Anspruch 3, dadurch gekennzeichnet, daß in dem beweglichen Steuerkurvenelement (15) des Einstell-Steuerkurvensystems (6) die Zahnstange (25) Zahnscheitel (31) und Böden (32) der Zahnlückenräume umfaßt, welche nach Oberflächen ausgerichtet sind, die parallel zur Oberfläche der Rampe der benachbarten axialen Steuerkurve (24) dieses beweglichen Steuerkurvenelements (15) sind.

5. Wechselgetriebe nach einem der Ansprüche 1 bis 4, dadurch gekennzeichnet, daß in dem Einstell-Steuerkurvensystem (6) das bewegliche Steuerkurvenelement (15) eine kreisförmige oder halbkreisförmige, eingeteilte Skala (20) trägt, die mit diesem beweglichen Steuerkurvenelement (15) hinter einem festen Zeiger beweglich ist.

6. Wechselgetriebe nach einem der Ansprüche 1 bis 5, dadurch gekennzeichnet, daß das Einstell-Steuerkurvensystem (6) das feste (14) und das bewegliche Steuerkurvenelement (15) aus einem synthetischen geformten oder gespritzten Material gebildet sind.

7. Wechselgetriebe nach einem der Ansprüche 1 bis 5, dadurch gekennzeichnet, daß in dem mit Festsetzung arbeitenden Einstell-Steuerkurvensystem (6) das feste (14) und das bewegliche (15) Steuerkurvenelement aus einem geformten oder gespritzten Metall gebildet sind.

8. Wechselgetriebe nach Anspruch 1, mit einer Riemenscheibe (2), deren fester Scheibenflansch (7) translatorisch und drehfest starr mit der ihn tragenden Welle (4) verbunden ist, dadurch gekennzeichnet, daß es eine Riemenscheibe (2) aufweist, deren beweglicher Scheibenflansch (11) mit einem axialen Zapfen (12) versehen ist, welcher in einem entsprechenden, in dem festen Scheibenflansch (7) gebildeten Loch (13) gleitverschiebbar ist.

9. Gerät, welches mit einem Wechselgetriebe (1) nach einem der Ansprüche 1 bis 8 versehen ist, dadurch gekennzeichnet, daß es ein Gestell (5) umfaßt, das als fester Anschlag für das mit Festsetzung arbeitende Einstell-Steuerkurvensystem (6) des Wechselgetriebes (1) dient.

10. Gerät nach Anspruch 9, dadurch gekennzeichnet, daß es in seinem Gestell (5) ein Fenster (30) umfaßt, das mit einem festen Zeiger versehen ist und hinter welchem die eingeteilte Skala (29) des mit Festsetzung arbeitenden Einstell-Steuerkurvensystems (6) vorbeiläuft.

## Claims

1. Variable speed transmission having a pulley with a moveable flange and receiving a transmission belt (3) and provided with an adjustment system comprising, on the one hand, means (6) for adjustment by blocking the moveable flange (11) with respect to the fixed flange (7) of this pulley (2) of the variable transmission, comprising two coaxial cam elements which are longitudinally complementary (14, 15) and mounted in superimposed relationship, one of these elements (14) being fixed and the other of these elements (15) being moveable and connected to this moveable flange (11) by means of a roller bearing (21), and, on the other hand, means for maintaining this moveable flange (11) in a position spaced from this fixed flange (7) comprising a control device (16) performing a relative rotary movement between these two cam elements (14, 15) for causing their cams to slide on each other (18, 19) in one sense of rotation to remove these two elements (14, 15) axially from each other in order to approach the fixed (7) and moveable (11) flanges of the pulley (2), and in an opposite sense of rotation to approach these two elements (14, 15) axially in order to remove the flanges (7, 11) of this pulley (2) of the variable transmission from each other upon selection of its operating speed, characterized in that the two axial cam elements are mounted within the space between the moveable flange (11) and a fixed abutment (5), the fixed cam element (14) being restrained by this abutment, and the control device (16) comprises a pinion (26) and rack (25) device.

2. Variable transmission according to claim 1, characterized in that, in the cam adjustment system (6), the fixed cam element (14) comprises in the periphery of its free surface opposed to the surface of connection with the fixed abutment (5) two axial semicircular identical cams (18, 19) forming a ramp rising from this free surface, and the moveable cam element (15) being provided on its free surface opposed to the surface adjacent the moveable flange (11), with two axial semicircular identical cams (23, 24) forming a ramp rising from this free surface and complementary to that of the axial cams (18, 19) of the fixed cam element (14).

3. Variable transmission according to claim 1 or 2, characterized in that, in the adjustable cam system (6), the moveable cam element (15) carries on a portion of its periphery and externally of its axial cams (23, 24) a semicircular rack (25) forming with a pinion (26) a pinion and rack control device (16), the pinion (26) being mounted with its freely rotatable axis (27) on an element or portion rigidly connected to this fixed abutment (5).

4. Variable transmission according to claim 3, characterized in that, in the moveable cam element (15) of the cam adjustment system (6), the rack (25) comprises tops (31) of the teeth and bottoms of the spaces between the teeth (32) which are aligned with surfaces parallel to that of the ramp of the adjacent axial cam (24) of this moveable cam element (15).

5. Variable transmission according to any of claims 1 to 4, characterized in that, in the adjustable cam system (6), the moveable cam element (15) carries a circular or semicircular graduated scale (29) which is moveable with this moveable cam element (15) behind a fixed index.

6. Variable transmission according to any of claims 1 to 5, characterized in that, in the cam adjustment system (6), the fixed (14) and moveable (15) cam elements are formed of a synthetic molded or injected material.

7. Variable transmission according to any of claims 1 to 5, characterized in that, in the cam system for adjustment by blocking (6), the fixed (14) and moveable (15) cam elements are formed of a molded or injected metal.

8. Variable transmission according to claim 1, having a pulley (2), the fixed flange (7) of which is connected for joint translation and rotation with the shaft (4) whereby it is carried, characterized in that it comprises a pulley (2) the moveable flange (11) of which is provided with an axial stud (12) sliding in a corresponding hole (13) formed in the fixed flange (7).

9. Apparatus provided with a variable speed transmission (1) according any of claims 1 to 8, characterized in that it comprises a frame (5) used as fixed abutment of the cam system for adjustment by blocking (6) of the variable transmission (1).

10. Apparatus according to claim 9, characterized in that it comprises in its frame (5) a window (30) provided with a fixed index wherebehind the graduated scale (29) of the cam system for adjustment by blocking (6) passes.

# FiG_1

# FiG_4

# FiG_3

# FIG_2

# FIG_5